# EUROPEAN PATENT SPECIFICATION

(11) **EP 1 965 406 B1**
(45) Date of publication and mention of the grant of the patent: **15.09.2010**
(21) Application number: 08250514.0
(22) Date of filing: 12.02.2008
(51) Int. Cl.: H01J 5/54, H01J 9/24, H01J 61/32, H01J 61/52

(54) **Compact reflector fluorescent lamp with good heat dispersion**
Fluoreszierende Kompaktreflektorlampe mit guter Wärmedispersion
Lampe fluorescente compacte à réflecteur doté d'une bonne dispersion de la chaleur

(30) Priority: 14.02.2007 CN 200720000768 U
(43) Date of publication of application: 03.09.2008
(73) Proprietor: Mass Technology (H.K.) Ltd., Rm 2902-6, Tower 6, The Gateway, 9 Canton Road, Tsimshatsui Kowloon, Hong Kong (HK)
(72) Inventor: Foo, Onn Fah, Tsimshatsui, Kowloon, Hong Kong (HK)
(74) Representative: Brookes Batchellor LLP

(56) References cited:
- WO-A-2006/053687
- CN-Y- 2 670 742
- CN-Y- 2 722 427
- US-A- 4 939 420
- US-A1- 2003 071 556
- US-A1- 2004 218 385
- US-A1- 2005 116 604

## Description

The present invention relates to a fluorescent lamp, and more particularly to a compact reflector fluorescent lamp unit with good heat dispersion.

At the present day, an existing reflector fluorescent lamp unit is configured by adopting an energy saving lamp tube around which a conical glass reflection shield is mounted. Such a unit makes use of the convergent action of the glass reflection shield to achieve the object of orientated illumination. Though the unit can solve the problem of poor optical efficiency of a conventional energy saving lamp, it suffers from the poor heat dispersion as the reflection shield generally made of glass and the electronic ballast are both mounted in the housing of the energy saving lamp such that the radiation heat of the lamp tube cannot be sufficiently emitted to the outside, which seriously endangers the lifespan of the circuit board mounted inside the energy saving lamp, while the reflection shield of such energy saving lamp is prone to damage while in use and in the process of transportation.

In the Chinese Utility Model Patent CN2670742 (Application Number 200320100262.2) titled "Compact reflector fluorescent lamp unit" filed by the same applicant of the present invention, a metallic reflection cup and a plastic casing specifically designed for enhancing the optical efficiency and minimizing the volume thereof are disclosed, wherein the plastic casing integrates with the lamp tube, reflection cup, electronic ballast assembly and lamp base, thereby forming a closely packed and properly assembled compact reflector fluorescent lamp unit in the form of a reflector lamp. While the heat dispersion of the unit is not sufficiently ideal, it is incorporated herein in its integrity for reference.

The present invention aims to overcome the defects of the foregoing prior art by providing a compact reflector fluorescent lamp having a better configuration and heat dispersion.

The technical solution for achieving the above aim is a compact reflector fluorescent lamp unit with good heat dispersion, comprising a lamp cap, a lamp tube, an electronic ballast assembly connected with the lamp cap and the lamp tube, a circuit board, a housing and an intermediate plate for enclosing the electronic ballast assembly and the circuit board, a reflection cup, and a transparent plate mounted on an open end of the reflection cup; wherein
the electronic ballast assembly is mounted on the circuit board via fastenings, and then both of which are jointly mounted in the housing;
the circuit board is provided with a plurality of insertion holes, each of which is formed by riveting in a hollow rivet made of a conducting material;
the housing is provided with a mounting hole arranged at its top surface for mounting the lamp cap, an annular recess arranged on an inner circumferential wall at its bottom, and a plurality of snap-fit members arranged above and against the annular recess;
the intermediate plate consists of a base plate and an annular boss extended upwardly and circumferentially from inside of the periphery of the base plate, on an upper surface of which a plurality of electrical connection pins corresponding to the insertion holes of the circuit board are arranged, and on a lower surface of which at least two protrusions and a hollow protrusion nearby the at least two protrusions are arranged; and a plurality of snap-fit legs corresponding to the snap-fit members of the housing are arranged between the annular boss and the periphery of the base plate; wherein the electrical connection pins of the intermediate plate are plugged into the insertion holes of the circuit board, the snap-fit legs are coupled with the snap-fit members of the housing, and the annular boss are engaged with the annular recess of the housing thereby enabling them to be closely coupled and relatively fixed; and
the reflection cup has a cavity in which the lamp tube can be received, wherein its top surface is provided with a plurality of assembly holes corresponding to the number of protrusions of the intermediate plate, and an opening arranged at one side of the assembly holes; and the reflection cup is fixed at the lower surface by virtue of the respective coupling of the assembly holes and the opening with the protrusions and the hollow protrusion of the intermediate plate.

In a preferred embodiment of the present invention, the number of the insertion holes of the circuit board, the connection pins of the intermediate plate, the snap-fit members of the housing, and the snap-fit legs of the intermediate plate is four respectively.

Preferably, the housing might be devised to be a step sleeve. More preferably, the housing might be composed of two to five overlapped step-tiers, wherein the annular recess is arranged at a bottom part of the lowest step-tier, and a plurality of positioning ribs are arranged on an inner circumferential wall at an upper part of the lowest step-tier for matching with the peripheral edge of the circuit board. Optimally, the housing might be composed of three overlapped step-tiers, wherein the lowest step-tier is in a trumpet shape, and above which two cylindrical shaped step-tiers are arranged, wherein their diameter is decreased stepwisely with respect to the lowest step-tier. Generally, the housing is made of plastic material.

In another preferred embodiment of the present invention, two protrusions in axial symmetry are arranged on the lower surface of the intermediate plate, while two assembly holes in axial symmetry and corresponding to the two protrusions are arranged on the top surface of the reflection cup.

The reflection cup of the present invention is generally made of metal, such as an aluminum alloy, while its internal surface has a high degree of fineness by means of polishing or chemical treatment and its external surface has a high degree of roughness by means of frosted finishing. Preferably, a circular recess might be arranged on an inner wall of the bottom of the reflection cup, a circular boss matching with the circular recess is arranged at the periphery of the transparent plate and by which and/or by adhesive the transparent plate can be held in the circular recess of the reflection cup, and top edge of the reflection cup is in tight coupling with the bottom of the housing by adhesive.

The lamp cap of the present invention can be a two-pin type lamp cap and/or a screwed type lamp cap, which is mounted on the top surface of the housing or the mounting hole on its top surface; wherein the lamp tube might be mounted within the reflection cap and can be selectively a 2SL type, 2WL type, or 4SL type compact fluorescent lamp tube. According to an embodiment, the foot of the lamp tube is inserted into the electrical connection pin of the intermediate plate, and the foot of the lamp tube is snap-fitted into the hollow protrusion of the intermediate plate and held therein by adhesive.

In can be thus seen that the compact reflector fluorescent lamp unit with good heat dispersion of the present invention employs mainly a snap-fit or coupling mechanism and an auxiliary method of adhesive for the connections respectively between the intermediate plate and the circuit board, the intermediate plate and the housing, the intermediate plate and the reflection cup, and the reflection cup and the transparent plate thereby enabling the structural components thereof to be properly arranged and tightly coupled. In this way, the assembling of the housing, intermediate plate and the reflection cup will thus be very convenient and reliable. Further, the reflection cup is connected to the lower surface of the intermediate plate, which means it is arranged independently at an underside of the housing, while it is made of metal material such as an aluminum alloy; and wherein its internal surface has a high degree of fineness by means of polishing or chemical treatment to facilitate the reflection of light, and its external surface has a high degree of roughness by means of frosted finishing thereby allowing the radiation heat generated by the lamp tube in operation to be conducted through the body of the reflection cup to and the enlarged external rough surface for better heat dispersion such that the heat can be effectively dissipated by the reflection cup. The compact reflector fluorescent lamp unit of the present invention has several advantages over the conventional reflector fluorescent lamp in that it is compact in appearance, small in volume, good in heat dispersion, long in lifespan and hard to break.

The present invention will be further described by way of example with reference to the drawings for easier understanding of these and other features of the present invention while the compact reflector fluorescent lamp unit with good heat dispersion of the present invention is not limited to the embodiments set forth hereinafter, wherein:
Figure 1a is a front view of a preferred embodiment of a compact reflector fluorescent lamp unit with good heat dispersion of the present invention;
Figure 1b is a sectional view of the compact reflector fluorescent lamp unit illustrated in Figure 1 a;
Figure 2 is a perspective view of the housing of the compact reflector fluorescent lamp unit illustrated in Figures 1a and 1b;
Figure 3a is a front view of the housing illustrated in Figure 2;
Figure 3b is a plan view of the housing illustrated in Figure 2;
Figure 4 is a plan view of the circuit board of the compact reflector fluorescent lamp unit illustrated in Figures 1a and 1b;
Figure 5a is a perspective view of the intermediate plate of the compact reflector fluorescent lamp unit illustrated in Figures 1a and 1b, which illustrates the structural arrangement of the intermediate plate viewed from above;
Figure 5b is a perspective view of the intermediate plate of the compact reflector fluorescent lamp unit illustrated in Figures 1 a and 1b, which illustrates the structural arrangement of the intermediate plate viewed from below;
Figure 6 is a perspective view of the reflection cup of the compact reflector fluorescent lamp unit illustrated in Figures 1a and 1b; and
Figure 7 is a front view of the reflection cup illustrated in Figure 6;

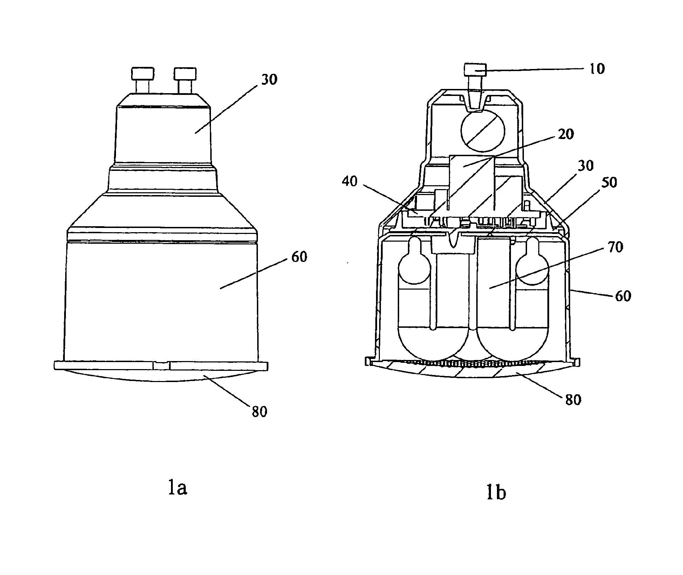

Reference will first be made to Figures 1a and 1b of the drawings which illustrate a preferred embodiment of a compact reflector fluorescent lamp unit with good heat dispersion of the present invention, comprising a lamp cap 10, an electronic ballast assembly 20, a housing 30, a circuit board 40, an intermediate plate 50, a reflection cup 60, a lamp tube 70 and a transparent plate 80; wherein the lamp cap 10 is a two-pin type lamp cap and/or a screwed type lamp cap; in the present embodiment, a two-pin type lamp cap having two conducting contact protrusions such as a GU10 lamp cap is used as the lamp cap.

The electronic ballast assembly 20 is a conventional ballast which can be used with lamp tubes of various standards and model numbers. The input end of the electronic ballast assembly 20 is connected to the conducting contact protrusions of the lamp cap 10 via conductors while its output end can be connected to the lamp tube 70.

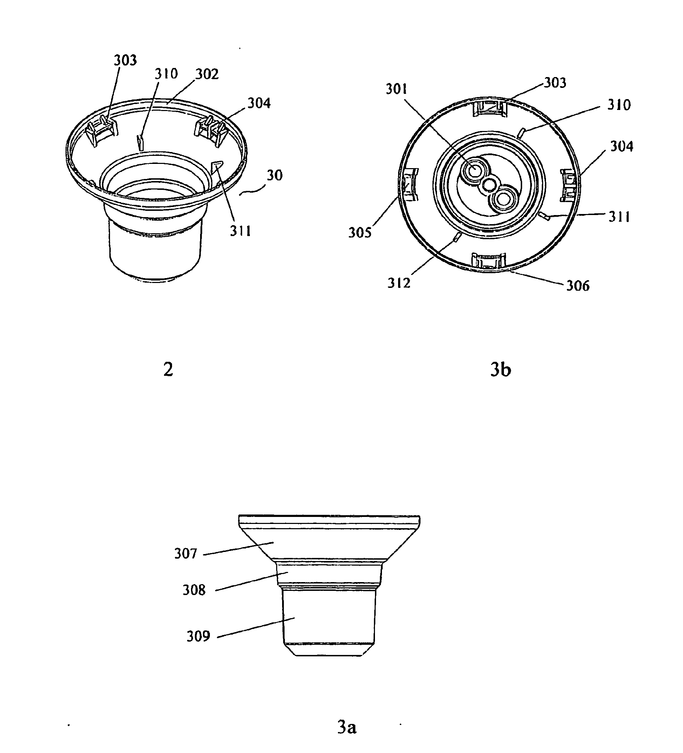

Please refer to Figures 2, 3a and 3b, wherein the housing 30 made of plastic is a step sleeve in which the ballast can be arranged. The housing 30 is provided with a mounting hole 301 arranged at its top surface for mounting the lamp cap, an annular recess 302 is arranged on an inner circumferential wall at its bottom, and four protruded snap-fit members 303-306 arranged on the inner circumferential wall are evenly distributed above and against the annular recess 302. To be specific, the housing 30 is composed of three overlapped step-tiers 307-309, wherein the lowest step-tier 307 is in a trumpet shape, and above which two cylindrical shaped step-tiers 308, 309 are arranged, wherein their diameter is decreased stepwisely with respect to the lowest step-tier 307. The annular recess 302 is arranged at the lower part of the lowest step-tier 307, and three inwardly protruded positioning ribs 310-312 are arranged on the inner circumferential wall at the upper part of the lowest step-tier 307.

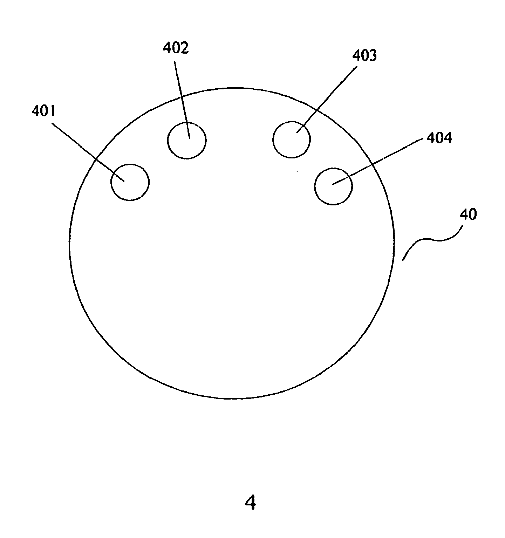

On the circuit board 40 four apertures are provided in each of which a hollow rivet made of a conducting material can be arranged to form four insertion holes 401-404 for electrical connection, as shown in Figure 4. In this way, the electronic ballast assembly 20 can be mounted on the circuit board 40 via fastenings or other coupling arrangements. After assembling, they are jointly mounted into the housing 30, while the peripheral edge of the circuit board 40 is matched up to the positioning ribs 310-312 of the housing whereby the circuit board 40 can be held within the housing 30.

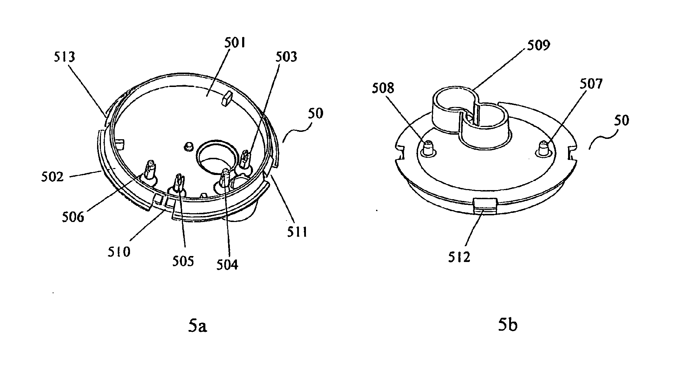

Please refer to Figures 5a and 5b, the intermediate plate 50 can be made in various shapes, for example, it can be in the form of a circular disc or assume a disk shape. The intermediate plate consists of a base plate 501 and an integrated annular boss 502 extended upwardly and circumferentially from inside of the periphery of the base plate. A number of electrical connection pins 503-506 are arranged on an upper surface of the intermediate plate 50, wherein the number corresponds to that of the insertion holes 401-404 of the circuit board, which is four according to the embodiment (see Figure 5a); and on a lower surface of the intermediate plate two protrusions 507, 508 in axial symmetry and a hollow protrusion 509 on one side of the two protrusions 507, 508 are arranged, wherein the hollow protrusion has a bore corresponding to the foot of the lamp tube; and a plurality of snap-fit legs, namely four snap-fit legs 510-513 according to the present embodiment, which correspond to the snap-fit members 303-306 of the housing are evenly distributed on the outer wall between the annular boss 502 and the periphery of the base plate. When the intermediate plate is mounted in the housing 30 and below the circuit board 40, each of the electrical connection pins 503-506 can be plugged into the respective insertion holes 401-404 of the circuit board 40, such that they not only form an electric coupling, i.e. the coupling between the lamp tube 70 and the output end of the electronic ballast assembly 20, but also a coupling which enables the circuit board to be fixed firmly on the intermediate plate. In addition, the snap-fit legs 510-513 of the intermediate plate are coupled with the snap-fit members 303-306 of the housing 30, and the annular boss 502 of the intermediate plate are engaged with the annular recess 302 of the housing 30, thereby enabling them to be closely coupled and relatively fixed and also allowing the electronic ballast assembly 20 to be firmly held in the housing 30 by means of the tight coupling between the intermediate plate and the housing, and the bottom end of the housing can thus be sealed.

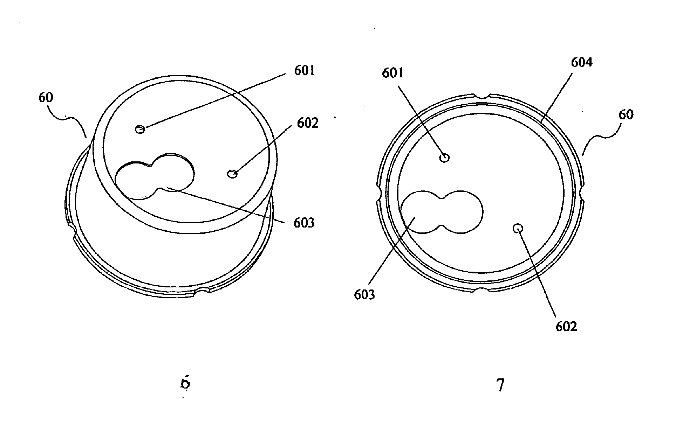

Please refer to Figures 6 and 7, the reflection cup 60 is a cavity in which the lamp tube can be received, wherein its size and shape can be varied according to the lamp tube in use. The top surface of the reflection cup is provided with two assembly holes 601, 602 in axial symmetry and an opening 603 arranged at one side of the assembly holes 601, 602, wherein the opening 603 is similar to the hollow protrusion 509 of the intermediate plate in that its size and shape can be varied according to the shape and position of the corresponding lamp tube. A circular recess 604 is arranged on an inner wall at the bottom of the reflection cup. The reflection cup is fixed at the lower surface of the intermediate plate 50 by virtue of the respective coupling of the assembly holes 601, 602 and the opening 603 with the protrusions 507, 508 and the hollow protrusion 509 of the intermediate plate. If necessary, they can be further fixed together firmly by means of adhesive, for example, the top edge of the reflection cup and the bottom of the housing can be tightly coupled by adhesive. Preferably, the reflection cup is made of metal such as aluminum alloy materials and the like, wherein aluminum alloy is a preferred material. The internal surface of the reflection cup has a high degree of fineness by means of polishing or chemical treatment to facilitate the reflection of light, while its external surface has a high degree of roughness by means of frosted finishing to enlarge the area for dissipation of the radiation heat thereby enhancing the heat dispersion of the lamp unit.

The lamp tube 70 might adopt any kinds of compact fluorescent lamp tube, wherein the preferred one can be selectively a 2SL type, 2WL type, or 4SL type compact fluorescent tube. In the present embodiment, a 2SL2U type lamp tube is employed. There are four feet at both ends of the lamp tube 70, and the feet of the lamp tube are generally connected to the output end of the electronic ballast. In this way, the lamp tube can be snap-fitted into the corresponding bore of the hollow protrusion 509 of the base plate and held therein by adhesive, while the four feet of the lamp tube are respectively coupled with the electrical connection pins 503-506 of the intermediate plate 50.

At the periphery of the transparent plate 80 a circular boss is provided by which the transparent plate can be received in the circular recess 604 of the reflection cup 60 and held therein by adhesive.

From the configuration set forth hereinbefore, it can be seen that a snap-fit or coupling mechanism is provided respectively between the intermediate plate and the housing, the intermediate plate and the circuit board, the intermediate plate and the reflection cup, and the reflection cup and the transparent plate, thereby allowing the reflection cup, the intermediate plate and the housing to be easily, reasonably, tightly and reliably assembled together. Further, the reflection cup is made of aluminum alloy which facilitates the convergence of light rays for achieving a light beam with relatively small diameter and high intensity at its center. Further, the external surface has a high degree of roughness by means of frosted finishing thereby allowing the radiation heat to be effectively conducted and dissipated by the reflection cup, such that the present invention possess the features of being high in optical efficiency, compact in size, good in heat dispersion and strong in structure.

In summing up, the description presented hereinbefore relates to merely some of the preferred embodiments of the present invention. It should be appreciated, however, that the present invention shall be limited only by the scope of the appended claims.

## Claims

1. A compact reflector fluorescent lamp unit with good heat dispersion, comprising a lamp cap (10), a lamp tube (70), an electronic ballast assembly (20) connected with the lamp cap and the lamp tube, a circuit board (40), a housing (30) and an intermediate plate (50) for enclosing the electronic ballast assembly (20) and the circuit board (40), a reflection cup (60), and a transparent plate (80) mounted on an open end of the reflection cup; **characterized in that,**
the electronic ballast assembly (20) is mounted on the circuit board (40) via fastenings, both of which are installed in the housing;
a plurality of insertion holes (401...404), in which hollow rivets made of a conducting material are riveted, is provided on the circuit board;
mounting holes (301) are arranged at the top surface of the housing for mounting the lamp cap, an annular recess (302) is arranged on an inner circumferential wall at the bottom of the housing, and a plurality of snap-fit members (303...306) is arranged on the inner circumferential wall close to the annular recess;
the intermediate plate (50) consists of a base plate (501) and an annular boss (502) protruded upwardly from inside of the periphery of the base plate, on an upper surface of which a plurality of electrical connection pins (503...506) corresponding to the insertion holes (401...404) of the circuit board are arranged, and on a lower surface of which at least two protrusions (507, 508) and a hollow protrusion (509) located on one side of the at least two protrusions are arranged; and a plurality of snap-fit legs (510...513) corresponding to the snap-fit members (303...306) of the housing are arranged between the periphery of the base plate and the outside of the annular boss; wherein the electrical connection pins (503...506) of the intermediate plate are plugged into the insertion holes (401...404) of the circuit board, the snap-fit legs (510...513) are coupled with the snap-fit members (303...306) of the housing, and the annular boss (502) are engaged with the annular recess (302) of the housing thereby enabling them to be closely coupled and relatively fixed; and
the reflection cup (60) has a cavity in which the lamp tube (70) can be received, on the top surface of which a plurality of assembly holes (601, 602) corresponding to the at least two protrusions (507, 508) of the intermediate plate (50) and an opening (603) located at one side of the assembly holes (601, 602) are arranged; and the reflection cup (60) is fixed at the lower surface of the intermediate plate (50) by means of the snap-fitting of the assembly holes (601, 602) and the opening (603) as well as the protrusions (507, 508) and the hollow protrusion (509) of the intermediate plate.

2. A reflector fluorescent lamp unit according to claim 1, wherein the number of the insertion holes (401...404) of the circuit board, the connection pins (503...506) of the intermediate plate, the snap-fit members (303...306) of the housing, and the snap-fit legs (510...513) of the intermediate plate is four, respectively

3. A reflector fluorescent lamp unit according to claim 1 or claim 2, wherein the housing (30) is in the form of a step sleeve.

4. A reflector fluorescent lamp unit according to claim 3, wherein the housing includes two to five overlapped step-tiers (307...309), wherein the annular recess (302) is arranged at lower part of the lowest step-tier (307), and a plurality of positioning ribs (310...312) are arranged on an inner circumferential wall of upper part of the lowest step-tier (307) so as to match with the peripheral edge of the circuit board.

5. A reflector fluorescent lamp unit according to claim 4, wherein the housing (30) includes three overlapped step-tiers (307...309), wherein the lowest step-tier (307) is in a trumpet shape, above which two cylindrical shaped step-tiers (308, 309) are arranged, wherein their diameters are decreased stepwisely with respect to the lowest step-tier (307).

6. A reflector fluorescent lamp unit according to any one of the preceding claims, wherein the housing (30) is made of plastic material.

7. A reflector fluorescent lamp unit according to any one of the preceding claims, wherein on the lower surface of the intermediate plate (50) two protrusions (507, 508) in axial symmetry are arranged, while two assembly holes (601, 602) in axial symmetry and corresponding to the two protrusions are arranged on the top surface of the reflection cup (60).

8. A reflector fluorescent lamp unit according to any one of the preceding claims, wherein the reflection cup (60) is made of metal, while its internal surface has a high degree of fineness by means of polishing or chemical treatment and its external surface has a high degree of roughness by means of frosted finishing.

9. A reflector fluorescent lamp unit according to claim 8, wherein the reflection cup (60) is made of an aluminum alloy

10. A reflector fluorescent lamp unit according to any one of the preceding claims, wherein a circular recess (604) is arranged at the bottom of an inner wall of the reflection cup (60), and a circular boss matching with the circular recess (604) is arranged at the periphery of the transparent plate (80), by which the transparent plate (80) is embedded in the circular
recess (604) of the reflection ccup (60), and the top edge of the reflection cup (60) is in tight coupling with the bottom of the housing (30).

11. A reflector fluorescent lamp unit according to claim 10, wherein the circular boss of the transparent plate (80) and the circular recess (604) of the reflection cup (60) is further engaged in an adhesive manner, while the top edge of the reflection cup (60) and the bottom of the housing (30) are also tightly coupled by adhesive.

12. A reflector fluorescent lamp unit according to any one of the preceding claims, wherein the lamp cap is a bipost type or screw type one, which is mounted on the top surface of the housing (30) or on the mounting holes (301) on the top surface.

13. A reflector fluorescent lamp unit according to any one of the preceding claims, wherein the lamp tube (70) is mounted within the reflection cup (60) and can be selectively a 2SL type, 2WL type, or 4SL type compact fluorescent lamp tube.

14. A reflector fluorescent lamp unit according to any one of the preceding claims, wherein the lamp tube (70) can be snap-fitted in the hollow protrusions (509) of intermediate plate by inserting the leg of the lamp tube into its electrical connection pins and fixed therein by means of an adhesive.

## Patentansprüche

1. Kompakte Leuchtstoff-Reflektorlampeneinheit mit guter Wärmeableitung, mit einem Lampendeckel (10), einer Lampenröhre (70), einer elektronischen Vorschaltanordnung (20), die mit dem Lampendeckel und der Lampenröhre verbunden ist, einer Schaltplatte (40), einem Gehäuse (30) und einer Zwischenplatte (50) zum Einschließen der elektronischen Vorschaltanordnung (20) und der Schaltplatte (40), einer Reflektionsschale (60) und einer transparenten Platte (80), die auf einem offenen Ende der Reflektionsschale montiert ist; **dadurch gekennzeichnet, dass**
die elektronische Vorschaltanordnung (20) über Befestigungen auf der Schaltplatte (40) montiert ist, die beide in dem Gehäuse installiert sind;
eine Mehrzahl von Einführlöchern (401 ... 404), in welche Hohlniete aus einem leitfähigen Material genietet sind, auf der Schaltplatte vorgesehen ist;
Montagelöcher (301), an der Oberseite des Gehäuses zum Montieren des Lampendeckels angeordnet sind, eine ringförmige ,Aussparung (302) auf einer ebenen Umfangswand am Boden des Gehäuses angeordnet ist und eine Mehrzahl von Schnappelementen (303 ... 306) auf der inneren Umfangswand nahe der ringförmigen Aussparung angeordnet ist;
die Zwischenplatte (50) aus einer Grundplatte (501) und einer ringförmigen Auswölbung (502) besteht, die von der Innenseite des Umfangs der Grundplatte nach oben vorsteht, wobei auf einer oberen Seite derselben eine Mehrzahl von elektrischen Anschlussstiften (503 ... 506), die mit den Einführlöchern (401 ... 404) der Schaltplatte korrespondieren, angeordnet sind und auf einer unteren Fläche derselben wenigstens zwei Vorsprünge (507, 508) und ein hohler Vorsprung (509), der auf einer Seite der wenigstens zwei Vorsprünge liegt, angeordnet sind; und eine Mehrzahl von Schnappfingern (510 ... 513), die mit den Schnappelementen (303 ... 306) des Gehäuses korrespondieren, zwischen dem Umfang der Basisplatte und der Außenseite der ringförmigen Auswölbung angeordnet sind; wobei die elektrischen Anschlussstifte (503 ... 506) der Zwischenplatte in die Einführlöcher (401 ... 404) der Schaltplatte eingesteckt sind, die Schnappfinger (510 ... 513) mit den Schnappelementen (303 ... 306) gekoppelt sind und die ringförmige Auswölbung (502) in die ringförmige Aussparung (302) des Gehäuses eingreift, wodurch sie eng gekoppelt und relativ zueinander fixiert werden können; und
die Reflektionsschale (60) einen Hohlraum hat, in welchem die Lampenröhre (70) aufgenommen werden kann, wobei auf deren Oberseite eine Mehrzahl von Montagelöcher (601, 602) die mit den wenigstens zwei Vorsprüngen (507, 508) der Zwischenplatte (50) korrespondieren, und eine Öffnung (603), die auf einer Seite der Montagelöcher (601, 602) liegt, angeordnet sind; und die Reflektionsschale (60) an der unteren Oberfläche der Zwischenplatte (50) mithilfe der Schnappverbindung der Montagelöcher (601, 602) und der Öffnung (603) sowie den Vorsprüngen (507, 508) und dem hohlen Vorsprung (509) der Zwischenplatte befestigt ist.

2. Leuchtstoff-Reflektorlampeneinheit nach Anspruch 1, in welcher die Anzahl der Einführlöcher (401 ... 404) der Schaltplatte, der Anschlussstifte (503 ... 506) der Zwischenplatte, der Schnappelemente (303 ... 306) des Gehäuses und der Schnappfinger (510 ... 513) der Zwischenplatte jeweils vier beträgt.

3. Leuchtstoff-Reflektorlampeneinheit nach Anspruch 1 oder Anspruch 2, in welcher das Gehäuse (30) in Form einer Stufenhülse vorliegt.

4. Leuchtstoff-Reflektorlampeneinheit nach Anspruch 3, in welcher das Gehäuse zwei bis fünf überlappte Stufenreihen (307 ... 309) umfasst und eine Mehrzahl von Positionierrippen (310 ... 312) auf einer inneren Umfangswand eines oberen Teils der untersten Stufenreihe (307) angeordnet ist, um so mit der Umfangskante der Schaltplatte zusammenzupassen.

5. Leuchtstoff-Reflektorlampeneinheit nach Anspruch 4, in welcher das Gehäuse (30) drei überlappte Stufenreihen (307 ... 309) umfasst, wobei die unterste Stufenreihe (307) eine Trompetenform hat, über welcher zylinderförmige Stufenreihen (308, 309) angeordnet sind, wobei ihre Durchmesser stufenweise in Bezug zu der untersten Stufenreihe (307) abnehmen.

6. Leuchtstoff-Reflektorlampeneinheit nach einem der vorhergehenden Ansprüche, in welcher das Gehäuse (30) aus einem Kunststoffmaterial hergestellt ist.

7. Leuchtstoff Reflektorlampeneinheit nach einem der vorhergehenden Ansprüche, in welcher auf der unteren Oberfläche der Zwischenplatte (50) zwei Vorsprünge (507, 508) in axialer Symmetrie angeordnet sind, während zwei Montagelöcher (601, 602) in axialer Symmetrie und korrespondierend zu den zwei Vorsprüngen auf der oben Oberfläche der Reflektionsschale (60) angeordnet sind.

8. Leuchtstoff-Reflektorlampeneinheit nach einem der vorhergehenden Ansprüche, in welcher die Reflektionsschale (60) aus Metall hergestellt ist, während ihre Innenfläche mithilfe einer Polier- oder Chemiebehandlung einen hohen Feinheitsgrad hat und ihre Außenfläche mithilfe einer Mattierung einen hohen Rauhigkeitsgrad hat.

9. Leuchtstoff-Reflektorlampeneinheit nach Anspruch 8, in welcher die Reflektionsschale (60) aus einer Aluminiumlegierung hergestellt ist.

10. Leuchtstoff-Reflektorlampeneinheit nach einem der vorhergehenden Ansprüche, in welcher eine kreisförmige Aussparung (604) am Boden einer Innenwand der Reflektionsschale (60) angeordnet ist, eine mit der kreisförmigen Aussparung (604) zusammenpassende kreisförmige Auswölbung am Umfang der transparenten Platte (80) angeordnet ist, durch die transparente Platte (80) in der kreisförmigen Aussparung (604) der Reflektionsschale (60) eingebettet ist, und sich die Oberkante der Reflektionsschale (60) in einer dichten Kopplung mit dem Boden des Gehäuses (30) befindet.

11. Leuchtstoff-Reflektorlampeneinheit nach Anspruch 10, in welcher die kreisförmige Auswölbung der transparenten Platte (80) und die kreisförmige Ausnehmung (604) der Reflektionsschale (60) ferner in einer haftenden Weise ineinandergreifen, während die Oberkante der Reflektionsschale (60) und der Boden des Gehäuses (30) auch durch ein Haftmittel gekoppelt sind.

12. Leuchtstoff-Reflektorlampeneinheit nach einem der vorhergehenden Ansprüche, in welcher der Lampendeckel in einer Zweistiftsockel-Bauart oder Gewinde-Bauart vorliegt, der auf die obere Oberfläche des Gehäuses (30) oder auf die Montagelöcher (301) auf der oberen Oberfläche montiert ist.

13. Leuchtstoff-Reflektorlampeneinheit nach einem der vorhergehenden Ansprüche, in welcher die Lampenröhre (70) innerhalb der Reflektionsschale (60) montiert ist und selektiv eine kompakte Leuchtstoff-Lampenröhre des 2SL-Typs, 2WL-Typs oder 4SL-Typs sein kann.

14. Leuchtstoff-Reflektorlampeneinheit nach einem der vorhergehenden Ansprüche, in welcher die Lampenröhre (70) in die hohlen Vorsprünge (509) der Zwischenplatte durch Einführen des Fingers der Lampenröhre in ihre elektrischen Anschlussstifte eingeschnappt und darin mithilfe eines Haftmittels fixiert werden kann.

## Revendications

1. Unité de lampe fluorescente à réflecteur compacte ayant une bonne dispersion thermique, comprenant un culot de lampe (10), un tube de lampe (70), un ensemble de ballast électronique (20) relié au culot de lampe et au tube de lampe, une carte de circuit (40), un boîtier (30) et une plaque intermédiaire (50) destinée à enfermer l'ensemble de ballast électronique (20) et la carte de circuit (40), une coupelle de réflexion (60), et une plaque transparente (80) montée sur une extrémité ouverte de la coupelle de réflexion, **caractérisée en ce que,**
l'ensemble de ballast électronique (20) est monté sur la carte de circuit (40) par le biais de fixations, les deux étant installé dans le boîtier,
une pluralité de trous d'insertion (401... 404), dans lesquels des rivets creux faits d'un matériau conducteur sont rivetés, sont prévus sur la carte de circuit,
des trous de montage (301) sont agencés au niveau de la surface supérieure du boîtier pour le montage du culot de lampe, un évidement annulaire (302) est agencé sur une paroi circonférentielle intérieure au fond du boîtier, et une pluralité d'éléments à encliquetage (303... 306) sont agencés sur la paroi circonférentielle intérieure à proximité de l'évidement annulaire,
la plaque intermédiaire (50) consiste en une plaque de base (501) et en une bosse annulaire (502) qui dépasse vers le haut par rapport à l'intérieur de la périphérie de la plaque de base, sur une surface supérieure de laquelle une pluralité de tiges de connexion électrique (503... 506) correspondant aux trous d'insertion (401... 404) de la carte de circuit sont agencées, et sur une surface inférieure de laquelle au moins deux protubérances (507, 508) et une protubérance creuse (509) située d'un côté des deux protubérances sont agencées, et une pluralité de pattes à encliquetage (510... 513) correspondant aux éléments à encliquetage (303... 306) du boîtier sont agencées entre la périphérie de la plaque de base et l'extérieur de la bosse annulaire, où les tiges de connexion électrique (503... 506) de la plaque intermédiaire sont branchées dans les trous d'insertion (401... 404) de la carte de circuit, les pattes à encliquetage (510... 513) sont couplées aux éléments à encliquetage (303... 306) du boîtier, et la bosse annulaire (502) est engagée avec l'évidement annulaire (302) du boîtier en leur permettant de cette manière d'être couplés de manière étroite et fixés relativement, et
la coupelle de réflexion (60) comporte une cavité dans laquelle le tube de lampe (70) peut être reçu, sur la surface supérieure de laquelle une pluralité de trous d'assemblage (601, 602) correspondant aux au moins deux protubérances (507, 508) de la plaque intermédiaire (50) et une ouverture (603) située d'un côté des trous d'assemblage (601, 602) sont agencés, et la coupelle de réflexion (60) est fixée au niveau de la surface inférieure de la plaque intermédiaire (50) au moyen de l'encliquetage des trous d'assemblage (601, 602) et de l'ouverture (603) ainsi que des protubérances (507, 508) et de la protubérance creuse (509) de la plaque intermédiaire.

2. Unité de lampe fluorescente à réflecteur selon la revendication 1, dans laquelle le nombre de trous d'insertion (401... 404) de la carte de circuit, de tiges de connexion (503... 506) de la plaque intermédiaire, d'éléments à encliquetage (303... 306) du boîtier, et de pattes à encliquetage (510... 513) de la plaque intermédiaire est de quatre, respectivement.

3. Unité de lampe fluorescente à réflecteur selon la revendication 1 ou 2, dans laquelle le boîtier (30) se présente sous la forme d'un manchon étagé.

4. Unité de lampe fluorescente à réflecteur selon la revendication 3, dans laquelle le boîtier comprend de deux à cinq étages en chevauchement (307... 309), dans laquelle l'évidement annulaire (302) est agencé au niveau de la parie inférieure de l'étage le plus bas (307), et une pluralité de nervures de positionnement (310... 312) sont agencées sur une paroi circonférentielle intérieure de la partie supérieure de l'étage le plus bas (307), de manière à correspondre au bord périphérique de la carte de circuit.

5. Unité de lampe fluorescente à réflecteur selon la revendication 4, dans laquelle le boîtier (30) comprend trois étages en chevauchement (307... 309), dans laquelle l'étage le plus bas (307) a une forme de trompette, au dessus de laquelle deux étages de forme cylindrique (308, 309) sont agencés, où leurs diamètres diminuent par palier par rapport à l'étage le plus bas (307).

6. Unité de lampe fluorescente à réflecteur selon l'une quelconque des revendications précédentes, dans laquelle le boîtier (30) est fait d'une matière plastique.

7. Unité de lampe fluorescente à réflecteur selon l'une quelconque des revendications précédentes, dans laquelle, sur la surface inférieure de la plaque intermédiaire (50), deux protubérances (507, 508) en symétries axiale sont disposées, alors que deux trous d'assemblage (601, 602) en symétries axiale et correspondant aux deux protubérances sont agencés sur la surface supérieure de la coupelle de réflexion (60).

8. Unité de lampe fluorescente à réflecteur selon l'une quelconque des revendications précédentes, dans laquelle la coupelle de réflexion (60) est faite de métal, alors que sa surface interne a un haut degré de finesse au moyen d'un polissage ou d'un traitement chimique et sa surface externe a un haut degré de rugosité au moyen d'un fini dépoli.

9. Unité de lampe fluorescente à réflecteur selon la revendication 8, dans laquelle la coupelle de réflexion (60) est faite d'un alliage d'aluminium.

10. Unité de lampe fluorescente à réflecteur selon l'une quelconque des revendications précédentes, dans laquelle un évidement circulaire (604) est agencé au fond d'une paroi intérieure de la coupelle de réflexion (60), et une bosse circulaire correspondant à l'évidement circulaire (604) est disposée à la périphérie de la plaque transparente (80), grâce à laquelle la plaque transparente (80) est incorporée dans l'évidement circulaire (604) de la coupelle de réflexion (60), et un bord supérieur de la coupelle de réflexion (60) est en couplage serré avec le fond du boîtier (30).

11. Unité de lampe fluorescente à réflecteur selon la revendication 10, dans laquelle la bosse circulaire de la plaque transparente (80) et l'évidement circulaire (604) de la coupelle de réflexion (60) sont en outre engagés de manière adhésive, alors que le bord supérieur de la coupelle de réflexion (60) et le fond du boîtier (30) sont également couplés de manière serrée par un élément adhésif.

12. Unité de lampe fluorescente à réflecteur selon l'une quelconque des revendications précédentes, dans laquelle le culot de lampe est un culot du type à deux broches ou du type à vis, qui est monté sur la surface supérieure du boîtier (30) ou sur les trous de montage (301) sur la surface supérieure.

13. Unité de lampe fluorescente à réflecteur selon l'une quelconque des revendications précédentes, dans laquelle le tube de lampe (70) est monté dans la coupelle de réflexion (60) et peut sélectivement être un tube de lampe fluorescente compacte de type 2SL, de type 2WL, ou de type 4SL.

14. Unité de lampe fluorescente à réflecteur selon l'une quelconque des revendications précédentes, dans laquelle le tube de lampe (70) peut être encliqueté dans les protubérances creuses (509) de la plaque intermédiaire en insérant la patte du tube de lampe dans ses tiges de connexion électrique et y être fixé au moyen d'un élément adhésif.
